# EUROPÄISCHE PATENTSCHRIFT

(11) **EP 1 454 876 B1**
(45) Veröffentlichungstag und Bekanntmachung des Hinweises auf die Patenterteilung: **20.07.2016**
(21) Anmeldenummer: 04003367.2
(22) Anmeldetag: 16.02.2004
(51) Int. Cl.: C01B 3/00, F17C 11/00

(54) **WASSERSTOFFSPEICHER**
APPARATUS FOR HYDROGEN STORAGE
DISPOSITIF DE STOCKAGE DE HYDROGÈNE

(30) Priorität: 07.03.2003 DE 10309983
(43) Veröffentlichungstag der Anmeldung: 08.09.2004
(73) Patentinhaber: ThyssenKrupp Marine Systems GmbH, 24143 Kiel (DE)
(72) Erfinder: Benthien, Udo, Dipl.-Ing., 23562 Lübeck (DE); Pommer, Hans, Dipl.-Ing., 24360 Barkelsby (DE); Sattler, Gunter, Dipl.-Ing., 23568 Lübeck (DE)
(74) Vertreter: ThyssenKrupp Intellectual Property GmbH

(56) Entgegenhaltungen:
- EP-A1- 0 061 191
- WO-A-89/02661
- DE-A1- 3 502 311
- US-A1- 2002 134 370

## Beschreibung

Die Erfindung betrifft einen Wasserstoffspeicher in Form eines Metallhydridspeichers.

Derartige Speicher zählen zum Stand der Technik, es wird in diesem Zusammenhang auf DE 35 02 311 A1 verwiesen, in der ein solcher Speicher im Einzelnen beschrieben ist. Er besteht im Wesentlichen aus einem typischerweise aus Stahl bestehenden für Wasserstoffgas dichten Druckbehälter der mit Metallhydrid gefüllt ist, in dessen Kristallgitter Wasserstoff einlagerbar ist. Da sich in das Metallhydrid beim Einlagern von Wasserstoff in erheblichem Maße ausdehnt sowie nach Abgabe desselben wieder zusammenzieht, ist es erforderlich, um eine örtliche Überdehnung des Druckbehälters zu vermeiden, das Metallhydrid über den Raum des Druckbehälters möglichst gleichmäßig zu verteilen und zu halten. Hierzu sind Metallbehälter vorgesehen, welche topfförmig ausgebildet und mit einem Deckel abgeschlossen sind. Diese mit Metallhydrid gefüllten Metallbehälter sind aus einem für Wasserstoffgas durchlässigen Behälter gebildet und innerhalb des Druckbehälters gestapelt. Zum BE- und Entladen ist ein zentral zur Druckbehälterachse angeordnetes Befüll- und Entnahmerohr vorgesehen, welches ebenfalls für Wasserstoffgas durchlässig ist und aus Sintermaterial besteht. Dieses Füll- und Entnahmerohr durchsetzt die Kassetten in der Mitte, die zum Rohr hin mit einer Wandung abgeschlossen sind.

Unabhängig davon, wie das Metallhydrid in den Kassetten eingebracht ist (als Granulat, pelletiert, pulverisiert), so wird es beim Einlagern von Wasserstoff zu staubfeinem Pulver zersetzt. Aufgrund der starken Dehnung ist selbst beim Anbringen eines Deckels nicht zuverlässig sichergestellt, das Teile des Pulvers den Deckel hoch drücken und/oder unterwandern und so auch in den Spaltbereich zwischen Druckbehälter und Kassetten Metallhydrid gelangt. Dann jedoch wird Wasserstoff in diesem Bereich angelagert, was zu unerwünschten örtlich erhöhten Verspannungen am Druckbehältermantel führen kann, wodurch der Druckbehälter nachhaltig geschädigt werden könnte.

Darüber hinaus ist beim Einlagern von Wasserstoff in den Speicher Wärme abzuführen und insbesondere bei Entnahme von Wasserstoff aus dem Speicher Wärme zuzuführen. Da das Metallhydrid ein sehr schlechter Wärmeleiter ist, muss dafür Sorge getragen werden, dass der Wärmeaustausch, der praktisch nur über die Druckbehälterwandung erfolgen kann, innerhalb des Druckbehälters so erfolgt, dass das gesamte Metallhydrid möglichst gleichmäßig erwärmt bzw. gekühlt wird. Bei den aus DE 35 02 311 A1 bekannten Dosen ist die Wärmeleitung insbesondere ins Innere des Druckbehälters unzulänglich, da der Querschnitt der dort verwendeten Dosenbleche systembedingt - diese sollen sich beim Ausdehnen verformen - vergleichsweise klein ist. Auch ist der wärmeleitende Kontakt der Dosen untereinander durch die vorhandenen Sicken zwischen Deckel und benachbarten Boden ungünstig. Schließlich ist diese bekannte Konstruktion aufwändig in der Herstellung und auch in der Montage, da die Dosen einzeln in den (noch offenen) Druckbehälter eingegliedert werden müssen. Hier besteht, insbesondere bei langen schlanken Druckbehältern die Gefahr des Verkantens und somit auch die Gefahr einer Verformung der Dose.

Vor diesem Hintergrund liegt der Erfindung der Aufgabe zugrunde, einen Metallhydridwasserstoffspeicher so auszubilden, dass die vorgenannten Nachteile vermieden werden, insbesondere das Metallhydrid auch bei Dehnung innerhalb der im Druckbehälter befindlichen Kassetten verbleibt und eine möglichst gute Wärmeleitung innerhalb des Druckbehälters erfolgt.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Grundgedanke der vorliegenden Erfindung ist es, die mit Metallhydrid gefüllten Kassetten zumindest an der zum Druckbehälter weisenden Seite, also an ihrem Außenumfang zumindest abschnittsweise miteinander zu verschweißen. Hierdurch wird zum einen der Wärmeaustausch zwischen den Kassetten wesentlich verbessert, da durch die umfänglichen Schweißverbindungen der gesamte Mantel der Kassetten wärmeleitend miteinander verbunden ist. Es wird also auch eine gute Wärmeleitung an den Stellen sichergestellt, die nicht wärmeleitend am Druckbehälter anliegen. Darüber hinaus wird durch die stoffschlüssige Verbindung sichergestellt, dass sich auch beim Ausdehnen des Metallhydrids kein Material in den Bereich zwischen Kassette und Druckbehälterwandung gelangt. Das Metallhydridpulver wird wesentlich zuverlässiger als beim Stand der Technik örtlich innerhalb des Druckbehälters, also in den Kassetten gehalten.

Ein weiterer wesentlicher Vorteil der erfindungsgemäßen Lösung besteht darin, dass der gesamte Druckbehälterinhalt, also sämtliche Kassetten einschließlich Metallhydridfüllung außerhalb des Druckbehälters, wo sie gut zugänglich und kontrollierbar sind, zusammengestellt und durch Schweißen miteinander verbunden werden können, so dass dann der durch die Kassetten gebildete Zylinderblock als Ganzes in den noch offenen Druckbehälter eingesetzt werden kann. Die Montage wird hierdurch also erheblich vereinfacht und verbessert.

Bevorzugt sind dabei die Kassetten topfförmig ausgebildet und innerhalb des Druckkörpers so gestapelt, dass der Boden der einen Kassette den Deckel der benachbarten Kassette bildet. Dabei sind benachbarte Kassetten vorzugsweise über den gesamten Umfang miteinander verschweißt, so dass sich kassettenseitig zur Druckbehälterwandung hin eine geschlossene Wandung bildet, die einerseits den Austritt von Metallhydrid in diesem Bereich verhindert und andererseits sämtliche Kassetten wärmeleitend miteinander verbindet. Da zumindest abschnittsweise, vorzugsweise jedoch ganzflächig der so gebildete Mantel der Kassetten an der Innenseite des Druckbehälters anliegt, erfolgt zudem eine sehr gute Wärmeleitung zwischen Druckbehälter und Kassetten und somit auch dem darin gelagerten Metallhydrid.

Die Be- und Endladung mit Wasserstoff erfolgt vorteilhaft über ein zentral angeordnetes und für Wasserstoff durchlässiges Befüll- und Entnahmerohr, das vorzugsweise koaxial innerhalb des Druckbehälters angeordnet ist und sämtliche Kassetten durchdringt. Dabei können die Kassetten zum Rohr hin eine Wandung aufweisen, um auch eine gleichmäßige Anlage des Metallhydrids in diese Richtung zu gewährleisten. In letzterem Fall muss jedoch dafür Sorge getragen werden, dass vor der Montage kein Metallhydrid durch die zentrale Bohrung entweicht. Dies erfolgt vorteilhaft dadurch, dass das Metallhydrid nicht in Pulver-, Granulatform oder Pellets eingefüllt wird, sondern als kompletter Gussblock, der nach dem ersten Beladen mit Wasserstoff dann selbsttätig zu Pulver zerfällt.

Vorteilhaft ist es, wenn der Boden einer Kassette abgestuft ausgebildet ist, derart, dass die Kassette formschlüssig in die offene Seite der benachbarten Kassette eingegliedert werden kann. Ein solcher Absatz erleichtert die Montage und bietet darüber hinaus neben dem Stoffschluss auch noch Formschluss, also zusätzliche Sicherheit. Darüber hinaus wird bei dieser Konstruktionsvariante die Wärmeleitung zwischen Boden und Kassettenmantel, insbesondere der daran anschließenden Kassette verbessert. Besonders vorteilhaft ist es, wenn die Abstufung so ausgebildet wird, dass sich zwischen benachbarten Kassetten eine umlaufende Nut ergibt. Diese umlaufende Nut kann dann zur Aufnahme der Schweißnaht dienen, so dass die Schweißnaht bündig mit dem äußeren Mantel der Kassetten abschließt. Darüber hinaus bietet der abgestufte innere Teil eine Schweißbettsicherung, welche ein Durchsacken der Schweißnaht ins Behälterinnere zuverlässig verhindert sowie darüber hinaus während des Schweißens die Wärmeeinwirkung auf das Metallhydrid verringert.

Um eine möglichst gleichmäßige Wärmeverteilung innerhalb des Druckbehälters, also auch innerhalb des schlecht wärmeleitenden Metallhydrids zu erreichen ist gemäß einer vorteilhaften Weiterbildung der Erfindung vorgesehen, den Boden einer Kassette mit einer radialen nach außen zunehmenden Dicke auszugestalten. In idealer Weise weist der Bodenquerschnitt von der Mitte zum Außenumfang hin die Kontur einer e-Funktion auf. Dann kann über den Druckbehälter, den Außenmantel der Kassetten und den so ausgestalteten Boden eine recht gleichmäßige und sehr gute Wärmeleitung auch bis in das Behälterinnere gewährleistet werden. Eine solche gleichmäßige Temperaturverteilung ist erstrebenswert, da dann über im Wesentlichen das gesamte Behältervolumen in gleichem Maße eine Ladung bzw. Endladung mit Wasserstoff und somit auch eine entsprechende gleichmäßige Dehnung erfolgt. Punktuelle Überdehnungen können damit weitgehend vermieden werden.

Die Kassetten können als Tiefziehteile, beispielsweise aus Aluminium oder einer gut wärmeleitenden und verformbaren Leichtmetalllegierung oder anderen Legierung bestehen. Sie können jedoch auch als Formteile z.B. aus Aluminiumblechen gezogen sein oder aber spanabhebend hergestellt oder bearbeitet sein. Die Herstellung des nach außen in seiner Dicke zunehmenden Bodens einer Kassette kann dadurch vereinfacht werden, dass die Kassette zunächst mit einem Boden konstanter Dicke hergestellt wird und dann ein Einlegeteil, beispielsweise in Form eines Aluminiumrings auf den Boden der Kassette gelegt wird, welches in der Dicke von innen nach außen zunimmt. Die lose Anlage genügt hier, da aufgrund der Dehnung des Metallhydrids beim ersten Beladen ein ausreichend hoher Anpressdruck gewährleistet ist, der einen guten Wärmeübergang auch für die nachfolgenden Entlade- du Ladevorgänge sicherstellt.

Alternativ oder zusätzlich kann der Boden wie vorstehend beschrieben zwei- oder auch dreiteilig ausgebildet werden, wobei ein Unterlegeteil vorgesehen ist, welches an der Unterseite des Bodens anliegt und in der Dicke von innen nach außen zunimmt. Es kann sich hierbei um den gleichen Ring handeln, der als Einlegeteil Verwendung findet. Dieser Ring wird dann vor dem Eingliedern der Kassette in die Nachbarkassette auf die offene Oberseite der mit Metallhydrid gefüllten benachbarten Kassette angeordnet oder am Boden der Kassette unter dem eigentlichen Boden befestigt.

Neben der guten Wärmeleitung bis in das Innere des Druckbehälters sichert die vorliegende Erfindung insbesondere die gleichmäßige Verteilung des Metallhydrids innerhalb des Behälters und verhindert ein Eindringen von Metallhydrid in dem Bereich zwischen Kassettenmantel und Druckbehälterwandung. Diese Eigenschaft macht den Wasserstoffspeicher besonders geeignet auch für die Verwendung in einem Unterseeboot, wo der Speicher typischerweise nicht senkrecht stehend, sondern liegend sowie aufgrund der sich ändernden Fahrlage des Bootes auch in beliebigen Schrägstellungen angeordnet sein kann. Die gute Wärmeleitung bis in das Innere des Druckbehälters sorgt zudem dafür, dass der Speicher vergleichsweise schnell Beladen und Entladen werden kann, was insbesondere auch im militärischen Bereich einen Vorteil darstellt.

Die innerhalb des Behälters angeordneten Kassetten müssen im ausreichenden Maße für Wasserstoff durchlässig sein, damit eine zügiges Beund Entladen über das zentrale Befüll- und Entnahmerohr möglich ist. Hierfür reicht die beispielsweise bei Aluminium vorhandene Materialdurchlässigkeit in der Regel nicht aus, so dass gegebenenfalls an geeigneter Stelle auch noch entsprechende Ausnehmungen vorzusehen sind, beispielsweise an der zum Be- und Entladerohr gerichteten Seite der Kassetten. Gegebenenfalls können solche Ausbildungen auch zwischen übereinander angeordneten Kassetten, z. B. an der Innenseite gebildet sein. Es ist also gegebenenfalls durch Materialwahl und/oder konstruktiv dafür Sorge zu tragen, dass eine ausreichende Wasserstoffdurchlässigkeit der Kassetten gegeben ist.

Die Erfindung ist nachfolgend anhand von in der Zeichnung dargestellten Ausführungsbeispielen erläutert. Es zeigen:
- Fig. 1: in starker vereinfachter Darstellung einen Längsschnitt durch einen Druckbehälter gemäß der Erfindung,
- Fig. 2: in vergrößerter Darstellung einen Ausschnitt aus Fig. 1, und zwar in dem Bereich, in dem die Kassetten umfangsseitig miteinander verschweißt sind in einer ersten Ausführungsvariante,
- Fig. 3: eine Ausführungsvariante in Darstellung nach Fig. 2 jedoch mit Druckbehälterwandung,
- Fig. 4: eine Ausführungsvariante in Darstellung nach Fig. 3 und
- Fig. 5: eine weitere Ausführungsvariante in Darstellung nach Fig. 3.

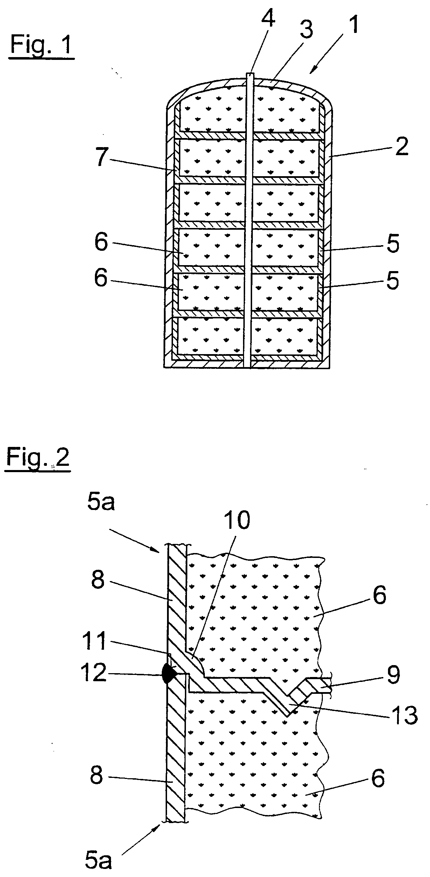

Der anhand von Fig. 1 dargestellte Druckbehälter 1 ist aus für Wasserstoff dichtem Stahl gefertigt und besteht aus einem zylindrischen Behälter 2, der an seiner Oberseite durch einen Deckel 3 abgeschlossen ist. Koaxial zur Behälterachse ist ein Befüll- und Entnahmerohr 4 innerhalb des Behälters 2 angeordnet, das aus Sintermaterial besteht, das für Wasserstoffgas durchlässig ist. Das Rohr 4 erstreckt sich vom Boden des Behälters 2 bis zum Deckel 3, wo es als druckfester Anschluss herausgeführt ist. Innerhalb des Behälters 2 sind topfförmige Kassetten 5 angeordnet die mit Metallhydrid 6 befüllt sind.

Die Kassetten 5 bestehen aus Aluminium und sind jeweils umlaufend mit der benachbart darüber angeordneten Kassette verschweißt, so dass die Kassetten 5 einen gemeinsamen zusammenhängenden zylindrischen Mantel 7 bilden, der einen Austritt von Metallhydrid in den Bereich zwischen Mantel 7 und Behälter 2 verhindert und darüber hinaus einen guten Wärmeübergang zum Behälter 2 sicherstellt.

Bei dem vorbeschriebenen sowie auch den nachfolgenden Ausführungsbeispielen ist die Schweißung zwischen benachbarten Kassetten 5 vollständig umlaufend über den gesamten Umfang erfolgt. Es kann jedoch auch eine abschnittsweise Schweißnaht vorgesehen sein, wenn dies den Anforderungen an Wärmeleitung und Festigkeit genügt, so dass gewährleistet ist, dass kein Metallhydrid in diesem Bereich austritt.

Wie Fig. 1 darstellt, weisen die Kassetten 5, anders als beim Stand der Technik, zum Befüll- und Entnahmerohr 4 hin keine Wandung auf. Dies ist nur möglich, wenn das Metallhydrid 6 in Form eines an die Kassettengröße angepassten Gussblocks in die Kassette eingelegt wird, bevor die Kassetten miteinander verschweißt und dann in den noch offenen Behälter 2 eingegliedert werden, der dann mit dem Deckel 3 druckdicht verschweißt wird. Die in den Kassetten 5 befindlichen Gussblöcke zerfallen beim Aktivieren, d. h. beim ersten Beladen mit Wasserstoff zu Metallhydridpulver, das sich dann aufgrund der Dehnung fest an das Rohr 4 anlegt, so dass das gesamte Material in seiner Lage im Druckbehälter 1 fixiert ist. Wenn die Kassetten, wie es aus dem Stand der Technik bekannt, mit pulverisierten, granulierten, in anderer Form gemahlenen oder pelletrierten Metallhydrid gefüllt werden sollen, ist es zweckmäßig, auch an der zum Rohr 4 hinweisenden Seite eine senkrechte Wandung vorzusehen und auch in diesem Bereich gegebenenfalls eine Schweißnaht zur benachbarten Kassette vorzusehen.

Fig. 2 zeigt eine Ausführungsform von Kassetten 5a, die jeweils aus einem zylindrischen Mantelabschnitt 8 und einem Boden 9 bestehen, wobei der Boden 9 nicht bündig, sondern über eine Art Stufe in Form eines bogenförmig nach innen verlaufenden Abschnitts 10 an den Mantelabschnitt 8 anschließt. Der Abschnitt 10 ist dabei so ausgestaltet, dass der Boden 9 zwar in die Oberseite der Kassette 5a der nächst darunter liegenden Kassette einschiebbar ist, jedoch nicht vollständig bis zum Mantelabschnitt 8 in diese eindringt, sondern einen nutähnlichen Freiraum 11 zwischen den Kassetten entstehen lässt. Diese Nut 11 dient zur Aufnahme einer Schweißnaht 12, so dass diese nur geringfügig über den Mantel 7 übersteht. Darüber hinaus bildet der Abschnitt 10 während des Schweißens eine Schweißbadsicherung.

Am Boden 9 ist eine im Querschnitt v-förmige Sicke 13 vorgesehen, welche sich beim Ausdehnen des Metallhydrids 6 in dieses eingreift und zum einen die Wärmeleitung in die darunter befindliche Kassette 5a verbessert sowie das in der Kassette 5a befindliche Material in seiner Position sichert.

Wie Fig. 2 verdeutlicht, bildet der Abschnitt 10 eine Stufe, die einerseits ein formschlüssiges Eingliedern einer oberen Kassette 5a in die darunter liegende Kassette 5a ermöglicht und zum anderen den nötigen Freiraum (Nut 11) für die Schweißnaht 12 bildet.

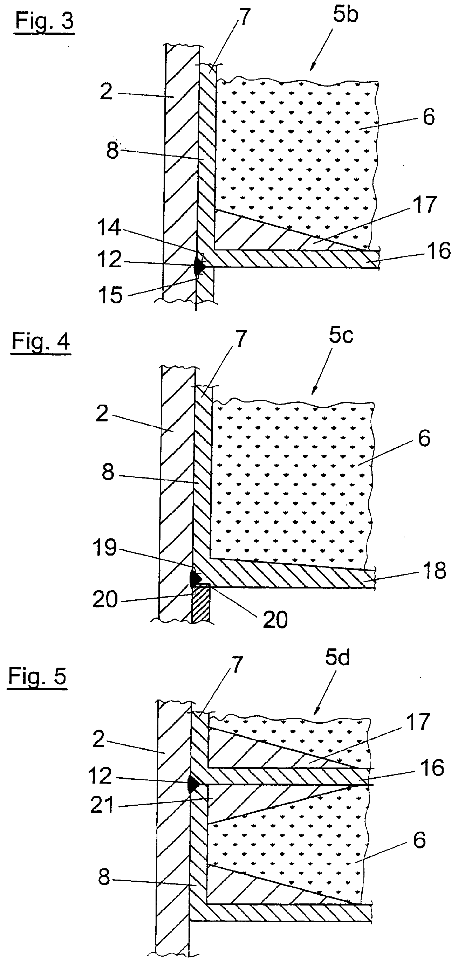

Die anhand von Fig. 3 dargestellte alternative Kassette 5b ist topfförmig und im Wesentlichen zylindrisch ausgestaltet, so dass sie in einfacher Weise herstellbar ist. Die untere Kante 14 sowie die obere Kante 15 sind zum Außenumfang hin abgeschrägt, zur Aufnahme der Schweißnaht 12.

Um den Wärmeeintrag in das Metallhydrid 6 bzw. aus dem Metallhydrid 6 zu verbessern, weist die Kassette 5b einen zweiteiligen Boden 16 auf, der aus dem eigentlichen Boden 16 aus einem Material konstanter Dicke gebildet ist sowie aus einem Einlegeteil 17, das aus gut wärmeleitendem Material, hier ebenfalls Aluminium, besteht und eine von der Mitte zum Rand hin zunehmende Dicke aufweist. Dieses Einlegeteil 7 ist bei der dargestellten Ausführungsvariante lose eingelegt und wird durch den Druck des Metallhydrids 6 fixiert. Es kann jedoch auch durch Schweißen zusätzlich gesichert sein.

Bei der Ausführung nach Fig. 4 ist eine Kassette 5c zwar ebenfalls im Wesentlichen topfförmig ausgebildet, weist jedoch einen von der Mitte zum Rand hin in der Dicke zunehmenden Boden 18 auf. Die untere Kante jeder Kassette 5c ist doppelt abgestuft ausgebildet, wie aus Fig. 4 im einzelnen vorgeht. Die erste Abstufung 19 bildet den erforderlichen Freiraum zur Aufnahme der Schweißnaht 12, wohingegen die zweite Abstufung 20 so ausgebildet ist, dass der Boden 18 einer oberen Kassette formschlüssig in die oben offene Seite einer darunter liegenden Kassette 5c eingliederbar ist. Die zweite Abstufung 20 erleichtert somit die Montage und bildet zugleich die Schweißbettsicherung.

Bei der anhand von Fig. 5 dargestellten Ausführungsvariante ist eine Kassette 5d ähnlich der Kassette 5b der anhand von Fig. 3 vorbeschriebenen Ausführungsvariante ausgebildet, d. h. sie weist einen Boden 16 konstanter Dicke mit einem Einlegeteil 17, welches von innen nach außen zunehmende Dicke aufweist, auf, das bündig am Boden 16 sowie am Mantel 7 bzw. dem entsprechenden Mantelabschnitt 8 anliegt. Auch dort ist zwischen benachbarten Kassetten 5d ein Freiraum für die Schweißnaht 12 gebildet. Im Unterschied zu der Ausführungsvariante nach Fig. 3 ist jedoch zusätzlich unter dem Boden 16 ein Unterlegeteil 21 angeordnet, welches ebenfalls mit zum äußeren Rand hin zunehmende Dicke aufweist und das mit seiner Oberseite an der Unterseite des Bodens 16 sowie außen am Mantelabschnitt 8 anliegt. Das Unterlegeteil 21 kann entweder lose auf die Oberseite der darunter liegenden Kassette 5d nach deren Befüllen aufgelegt sein oder aber bevorzugt mit dem Boden 16 verschweißt sein. In der dargestellten Ausführung ist der Verbund lose. Durch den beim Dehnen des Metallhydrids 6 entstehenden Druck wird das Unterlegeteil 21 fest an den Boden 16 gedrückt, so dass ein guter Wärmeübergang stattfindet. Auch das Unterlegeteil 21 besteht aus Aluminium.

Die anhand der Figuren 3 bis 5 dargestellten Bodenausbildungen dienen insbesondere zu einer besseren Wärmeverteilung innerhalb der Kassette. Durch die höheren Querschnitte im Außenbereich wird die Wärmeleitung wesentlich erhöht, so dass das in den Kassetten 5 befindliche Metallhydrid 6 im Wesentlichen gleichmäßig erwärmt bzw. abgekühlt wird. Die Wärmeleitung erfolgt über den Boden an den Mantel 7 und von dort an die Druckbehälterwandung 2. Aufgrund des Drucks des Metallhydrids beim Ausdehnen legen sich die Mantelabschnitte 8 an die Druckbehälterwandung an und stellen somit zumindest abschnittsweise eine gut wärmeleitende Verbindung her.

Die anhand der Figuren 2 bis 5 beschriebenen Einzelmerkmale können gemäß der Erfindung miteinander kombiniert werden, dies gilt sowohl hinsichtlich der Bodenausführungen als auch hinsichtlich der Schweißnahtanordnungen.

Allen Ausführungen gemeinsam ist, dass die mit Metallhydrid gefüllten Kassetten 5 übereinander gestapelt und miteinander verschweißt werden. Der so gebildete fertig beladene Kassettenturm wird dann in den noch offenen Behälter 2 eingliedert, wonach dieser durch den Deckel verschlossen und zum Druckbehälter 1 ausgebildet wird.

### Bezugszeichenliste

- 1: - Druckbehälter
- 2: - Behälter
- 3: - Deckel
- 4: - Befüll- und Entnahmerohr
- 5: - Kassetten
- 5a: - Kassetten (Fig. 2)
- 5b: - Kassetten (Fig. 3)
- 5c: - Kassetten (Fig. 4)
- 5d: - Kassetten (Fig. 5)
- 6: - Metallhydrid
- 7: - Mantel
- 8: - Mantelabschnitt
- 9: - Boden
- 10: - Abschnitt
- 11: - Nut
- 12: - Schweißnaht
- 13: - Sicke
- 14: - untere Kante
- 15: - obere Kante
- 16: - Boden
- 17: - Einlegeteil
- 18: - Boden
- 19: - 1. Abstufung
- 20: - 2. Abstufung
- 21: - Unterlegeteil

## Patentansprüche

1. Wasserstoffspeicher mit einem für Wasserstoff dichten Druckbehälter(1), in dem Metallhydrid (6) in für Wasserstoff durchlässigen Kassetten (5) angeordnet ist, wobei benachbarte Kassetten (5) zumindest an der zum Druckbehälter (1) weisenden Seite zumindest abschnittsweise miteinander verschweißt sind.

2. Wasserstoffspeicher nach Anspruch 1, bei dem der Druckbehälter (1) eine im Wesentlichen zylindrische Form aufweist und die Kassetten (5) topfförmig und innerhalb des Druckbehälters (1) derart gestapelt sind, dass der Boden (9) einer Kassette (5) den Deckel der benachbarten Kassette (5) bildet, wobei benachbarte Kassetten (5) vorzugsweise über den gesamten Umfang miteinander verschweißt sind.

3. Wasserstoffspeicher nach einem der vorhergehenden Ansprüche, bei dem innerhalb des Druckbehälters (1) mindestens ein, vorzugsweise zentral angeordnetes und für Wasserstoff durchlässiges Befüll- und Entnahmerohr (4) vorgesehen ist, das die Kassetten (5) durchdringt.

4. Wasserstoffspeicher nach einem der vorhergehenden Ansprüche, bei dem der Boden (9) einer Kassette (5) gestuft ausgebildet ist, derart, dass sie förmschlüssig in die offene Seite der benachbarten Kassette (5) eingegliedert sind.

5. Wasserstoffspeicher nach einem der vorhergehenden Ansprüche, bei dem die Kassetten (5) so ausgebildet sind, dass sich beim Eingliedern benachbarter Kassetten jeweils eine umlaufende Nut (11) ergibt, in welcher die Schweißnaht (12) gelegt wird.

6. Wasserstoffspeicher nach einem der vorhergehenden Ansprüche, bei dem der Boden (18) einer Kassette (5c) eine radial nach außen zunehmende Dicke aufweist.

7. Wasserstoffspeicher nach einem der vorhergehenden Ansprüche, bei dem der Boden (16, 17) einer Kassette (5b) mindestens zweiteilig ausgebildet ist, wobei ein Teil (17) des Bodens durch ein Einlegeteil (17) gebildet ist, welches in der Dicke von innen nach außen zunimmt.

8. Wasserstoffspeicher nach einem der vorhergehenden Ansprüche, bei dem der Boden (16, 17) einer Kassette (5) mindestens zweiteilig ausgebildet ist, wobei ein Teil (18) des Bodens durch ein Unterlegeteil (18) gebildet ist, welches in der Dicke von innen nach außen zunimmt.

9. Wasserstoffspeicher nach einem der vorhergehenden Ansprüche, bei dem der Boden (9) einer Kassette (5) einen zur offenen Seite der benachbarten Kassette (5) gerichteten ringförmigen Wulst (13) aufweist.

10. Wasserstoffspeicher nach einem der vorhergehenden Ansprüche, bei dem die Kassetten (5) aus Aluminium oder einer für Wasserstoffgas durchlässigen, gut wärmeleitenden und verformbaren Leichtmetalllegierung bestehen.

11. Verwendung eines Wasserstoffspeichers nach einem der vorhergehenden Ansprüche für ein Unterseeboot.

## Claims

1. Hydrogen storage apparatus with a pressurized hydrogen-impermeable container (1) in which metal hydride (6) is arranged in hydrogen-permeable cartridges (5), wherein adjacent cartridges (5) are welded together at least on the side facing the pressurized container (1) and at least in certain sections.

2. Hydrogen storage apparatus according to Claim 1, in which the pressurized container (1) is essentially cylindrical and the cartridges (5) are pot-shaped and are stacked within the pressurized container (1) such that the base (9) of one cartridge (5) forms the lid of the adjacent cartridge (5), adjacent cartridges (5) being welded together preferably over the entire circumference.

3. Hydrogen storage apparatus according to either of the preceding claims, in which at least one hydrogen-permeable filling and extraction pipe (4), which passes through the cartridges (5), is arranged preferably centrally inside the pressurized container (1).

4. Hydrogen storage apparatus according to one of the preceding claims, in which the base (9) of one cartridge (5) is stepped such that the bases are slotted in a form-fitting manner into the open side of the adjacent cartridge (5).

5. Hydrogen storage apparatus according to one of the preceding claims, in which the cartridges (5) are formed such that slotting in adjacent cartridges in each case produces a circumferential groove (11) in which the weld seam (12) is placed.

6. Hydrogen storage apparatus according to one of the preceding claims, in which the thickness of the base (18) of a cartridge (5c) increases radially outwards.

7. Hydrogen storage apparatus according to one of the preceding claims, in which the base (16, 17) of a cartridge (5b) is formed in at least two parts, one part (17) of the base being formed by an insert (17) which increases in thickness from inside to outside.

8. Hydrogen storage apparatus according to one of the preceding claims, in which the base (16, 17) of a cartridge (5) is formed in at least two parts, one part (18) of the base being formed by an underlying part (18) which increases in thickness from inside to outside.

9. Hydrogen storage apparatus according to one of the preceding claims, in which the base (9) of a cartridge (5) has an annular boss (13) facing the open side of the adjacent cartridge (5).

10. Hydrogen storage apparatus according to one of the preceding claims, in which the cartridges (5) are made of aluminium or of a lightweight metal alloy which is permeable to hydrogen, has good thermal conductivity and good deformation properties.

11. Use of a hydrogen storage apparatus according to one of the preceding claims, for a submarine.

## Revendications

1. Dispositif de stockage de l'hydrogène avec un réservoir sous pression (1) étanche à l'hydrogène, dans lequel un anhydride métallique (6) est disposé dans des cassettes (5) perméables pour l'hydrogène, dans lequel des cassettes voisines (5) sont soudées l'une à l'autre au moins localement au moins sur le côté tourné vers le réservoir sous pression (1).

2. Dispositif de stockage de l'hydrogène selon la revendication 1, dans lequel le réservoir sous pression (1) présente une forme essentiellement cylindrique et les cassettes (5) sont empilées en forme de pot et à l'intérieur du réservoir sous pression (1), de telle manière que le fond (9) d'une cassette (5) forme le couvercle de la cassette voisine (5), dans lequel des cassettes voisines (5) sont soudées l'une à l'autre de préférence sur tout leur pourtour.

3. Dispositif de stockage de l'hydrogène selon l'une quelconque des revendications précédentes, dans lequel il est prévu à l'intérieur du réservoir sous pression (1) au moins un tube de remplissage et de prélèvement (4), disposé de préférence au centre et perméable à l'hydrogène, qui traverse les cassettes (5).

4. Dispositif de stockage de l'hydrogène selon l'une quelconque des revendications précédentes, dans lequel le fond (9) d'une cassette (5) est de forme étagée, de telle manière qu'il s'engage par emboîtement dans le côté ouvert de la cassette voisine (5).

5. Dispositif de stockage de l'hydrogène selon l'une quelconque des revendications précédentes, dans lequel les cassettes (5) sont configurées de telle manière que, lors de l'engagement de cassettes voisines, il se forme chaque fois une rainure périphérique (11), dans laquelle le cordon de soudure (12) est déposé.

6. Dispositif de stockage de l'hydrogène selon l'une quelconque des revendications précédentes, dans lequel le fond (18) d'une cassette (5c) présente une épaisseur croissant radialement vers l'extérieur.

7. Dispositif de stockage de l'hydrogène selon l'une quelconque des revendications précédentes, dans lequel le fond (16, 17) d'une cassette (5b) est réalisé en au moins deux parties, dans lequel une partie (17) du fond est formée par une pièce d'insertion (17), dont l'épaisseur augmente de l'intérieur vers l'extérieur.

8. Dispositif de stockage de l'hydrogène selon l'une quelconque des revendications précédentes, dans lequel le fond (16, 17) d'une cassette (5) est réalisé en au moins deux parties, dans lequel une partie (18) du fond est formée par une pièce sous-jacente (18), dont l'épaisseur augmente de l'intérieur vers l'extérieur.

9. Dispositif de stockage de l'hydrogène selon l'une quelconque des revendications précédentes, dans lequel le fond (9) d'une cassette (5) présente un bourrelet annulaire (13) orienté vers le côté ouvert de la cassette voisine (5) .

10. Dispositif de stockage de l'hydrogène selon l'une quelconque des revendications précédentes, dans lequel les cassettes (5) sont constituées d'aluminium ou d'un alliage métallique léger perméable à l'hydrogène gazeux, bon conducteur de la chaleur et déformable.

11. Utilisation d'un dispositif de stockage de l'hydrogène selon l'une quelconque des revendications précédentes pour un sous-marin.
